# EUROPÄISCHE PATENTSCHRIFT

(11) **EP 0 515 965 B1**
(45) Veröffentlichungstag und Bekanntmachung des Hinweises auf die Patenterteilung: **01.03.1995**
(21) Anmeldenummer: 92108482.8
(22) Anmeldetag: 20.05.1992
(51) Int. Cl.: F16K 5/10

(54) **Ventil zum Steuern oder Regeln des Durchflusses eines Strömungsmittels**
Valve to control or regulate fluid flow
Soupape de contrôle ou de réglage du débit de fluide

(30) Priorität: 28.05.1991 DE 4117445
(43) Veröffentlichungstag der Anmeldung: 02.12.1992
(73) Patentinhaber: GASTECHNIC PRODUKTIONS- UND VERTRIEBSGESELLSCHAFT m.b.H., D-75334 Straubenhardt (DE)
(72) Erfinder: Spiesser, Gilbert, W-7541 Straubenhardt 1 (DE); Willing, Waldemar, W-7541 Straubenhardt 5 (DE)

(56) Entgegenhaltungen:
- EP-A- 0 171 004
- DE-A- 2 503 477
- DE-A- 3 941 040
- FR-A- 1 129 686
- US-A- 3 526 249

## Beschreibung

Die Erfindung betrifft ein Ventil zum Steuern oder Regeln des Durchflusses eines Strömungsmittels mit einem Ventilgehäuse, das einen Durchtrittskanal für das Strömungsmittel aufweist und mit einem im Durchtrittskanal angeordneten Ventilelement, das mittels einer Betätigungsvorrichtung drehbar ist.

Derartige Ventile dienen zur stufenlosen Steuerung oder Regelung des Durchflusses von gasförmigen oder flüssigen Medien. Sie werden beispielsweise zur Leistungsregelung von Gasbrennern benutzt. Um den Durchfluss exakt steuern oder regeln zu können, ist es notwendig, daß jede Drehbewegung eine lineare Änderung des Durchflusses bzw. des Volumenstromes zur Folge hat.

Aus der OS 25 58 272 ist bereits eine Drosselklappe zur Steuerung einer Durchflußmenge in linearer Abhängigkeit von der Drehbewegung einer Klappe bekannt. Diese Drosselklappe weist einen Grundkörper mit einem besonders gestalteten Durchgangskanal auf. In letzterem befindet sich die drehbare Klappe, die in Abhängigkeit von ihrer Öffnungsstellung die Durchflußmenge steuert.

Die bekannte Drosselklappe ist aufgrund ihrer besonderen Formgebung fertigungstechnisch aufwendig. Außerdem arbeiten Drosselklappen nicht unabhängig von der Höhe des Eingangsdruckes und verursachen einen großen Druckverlust. Weiterhin ist der Bereich, in dem gesteuert oder geregelt werden kann, nicht sehr groß, da keine Kleinstmengen einstellbar sind.

Aus der FR-A-1129 686 ist ein weiteres Ventil bekannt, in dem die Drehbewegung des Regelgliedes eine lineare Änderung des Durchflusses zur Folge hat. Dieses Ergebnis wird gemäß der FR-A durch die angepaßten Formgebungen des Regelgliedes und der Eintrittsöffung des Gehäuses erreicht.

Demgemäß besteht die Aufgabe der Erfindung darin, ein Ventil der eingangs genannten Art zu schaffen, das fertigungstechnisch einfach aufgebaut ist und mit dem der Durchfluß eines Strömungsmittels unabhängig vom Eingangsdruck mit möglichst geringem Druckverlust in linearer Abhängigkeit von der Drehbewegung des Ventilelementes in einem großen Bereich gesteuert oder geregelt werden kann.

Gemäß der Erfindung wird die Aufgabe dadurch gelöst, daß das Ventilelement eine Öffnung aufweist, die derart gestaltet ist, daß sich ihr Durchtrittsquerschnitt bei einer Drehung des Ventilelementes als Funktion dritten Grades in Abhängigkeit vom Drehwinkel ändert.

Im gesamten Arbeitsbereich ist eine Linearität zwischen der Drehbewegung des Ventilelementes und dem Durchfluß des Strömungsmediums gegeben. Auch kleinste Volumenströme sind einstellbar, so daß der Durchfluß in einem großen Bereich gesteuert oder geregelt werden kann.

Das Ventil verursacht nur einen kleinen Druckverlust bei maximaler Menge. Es ist sowohl bei hohen als auch bei niedrigen Drücken einsetzbar.

Die Feinregulierung ist einfach, da auch kleinste Stellwege realisierbar sind.
Das Ventil ist fertigungstechnisch einfach aufgebaut.

Das Ventilelement kann beispielsweise kugelförmig sein, wobei die Drehachse senkrecht zur Strömungsrichtung liegt. Das Ventil arbeitet unabhängig von Druckeinflüssen. Es treten lediglich kleine Reibungsverluste bei der Drehung auf.

Konstruktiv besonders einfach ist es, wenn das Ventilelement hohlzylinderförmig ausgebildet ist, wobei stromab der Öffnung eine Austrittsöffnung vorgesehen ist. In der einseitig gekrümmten Wand kann die Öffnung besonders leicht realisiert werden. Es wird vorausgesetzt, daß die Austrittsöffnung unabhängig vom Drehwinkel stets geöffnet ist.

Eine besonders vorteilhafte Ausführungsform ist dadurch gekennzeichnet, daß ein Drosselelement axial verschiebbar in das Ventilelement eingesetzt ist, derart, daß sich bei der Axialbewegung der maximale Durchtrittsauerschnitt der Öffnung im Ventilelement verändert.

Mit dem Drosselelement kann der maximale Durchfluß bis zu 50 % ohne Einschränkung des Drehweges sowie ohne Einfluß auf die Linearität verändert werden und ohne daß ein Ausbau des Ventiles erforderlich wird.

Eine wesentliche Weiterbildung des Ventils nach der Erfindung besteht darin, daß die Öffnung des Ventilelementes vier Seitenbegrenzungen aufweist, von denen zwei parallel zur Achse verlaufen und ungleich lang sind sowie mit der dritten einen im wesentlichen rechten Winkel bilden, wobei die vierte Seitenbegrenzung kurvenförmig in Form einer quadratischen Funktion ausgebildet ist.

Vorzugsweise verändert das Drosselelement bei der Axialbewegung den Durchtrittsquerschnitt der Öffnung im Bereich der geraden Seitenbegrenzungen.

Nach einem weiteren vorteilhaften Merkmal der Erfindung ist das Ventil dadurch gekennzeichnet, daß das Ventilelement in einen Zylinderkörper eingesetzt ist, der eine Eintrittsspalte und eine Austrittsspalte für das Strömungsmittel aufweist.

Die Querschnittsform der Eintrittsspalte und der Austrittsspalte ist beliebig, vorzugsweise rechteckig. Die Eintrittsspalte bildet durch das Zusammenwirken mit der Öffnung den freien Durchtrittsquerschnitt für das Strömungsmittel.

Ein weiteres vorteilhaftes Merkmal der Erfindung besteht darin, daß das Ventilelement eine Stirnwand aufweist, die mit Mitnahmenocken versehen ist, welche in einen Deckel reingreifen, der mit der Betätigungsvorrichtung verbunden ist. Bei der Betätigungsvorrichtung kann es sich beispielsweise um einen Motor handeln.

Besonders vorteilhaft ist, daß das Drosselelement mit einer Einstellvorrichtung verbunden ist.

Eine vorteilhafte Ausführungsform der Einstellvorrichtung ist dadurch gekennzeichnet, daß sich ein an dem Drosselelement befestigter Einstellstift drehbar in einer Hülse befindet, die mit einer stirnseitigen Wand verbundenen ist.

Das erfindungsgemäße Ventil ist besonders servicefreundlich, dadurch daß das Ventilelement und das Drosselelement im Ventilgehäuse modulartig austauschbar angeordnet sind.

Die Erfindung wird im folgenden anhand einer bevorzugten Ausführungsform des erfindungsgemäßen Ventils im Zusammenhang mit der Zeichnung näher erläutert.

Die Zeichnung zeigt in
- Fig. 1: einen Längssschnitt durch das Ventil;
- Fig. 2: das Detail "a" in Fig. 1 in Seitenansicht;
- Fig. 3: ein Diagramm, in dem der Volumenstrom Q in Abhängigkeit vom Drehwinkel α dargestellt ist.

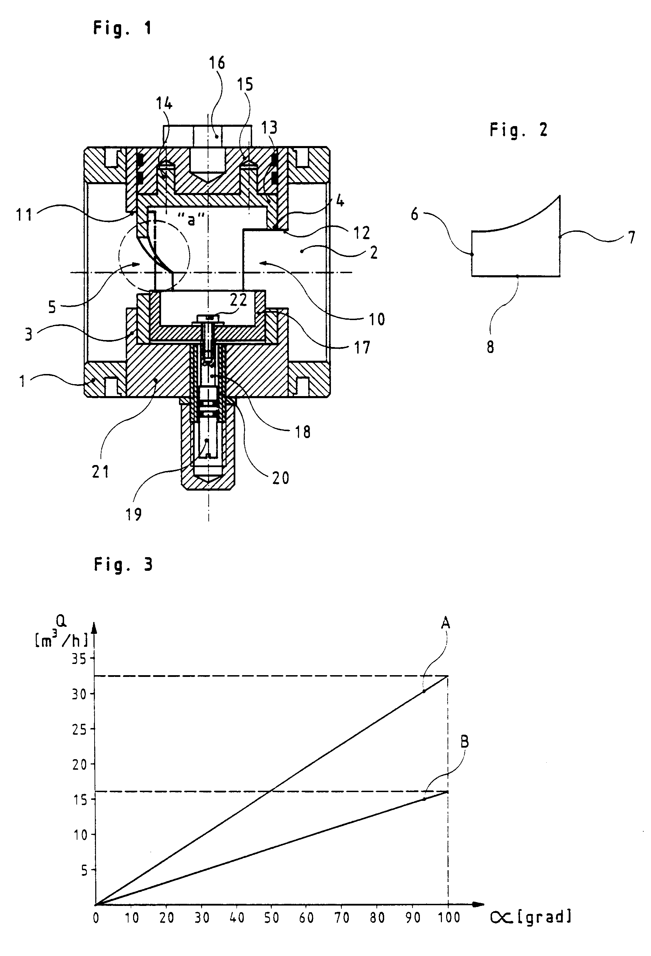

Das dargestellte Ventil ist in eine nicht dargestellte Gasleitung eingebaut und dient zur Steuerung der Brenngaszufuhr zu einem ebenfalls nicht dargestellten Gasbrenner. Das Ventil weist ein würfelförmiges Ventilgehäuse 1 auf und ist mit einem Durchtrittskanal 2 für das Brenngas versehen. In das Ventilgehäuse 1 ist mittig ein Zylinderkörper 3 eingesetzt und mit dem Ventilgehäuse 1 verklebt. Allerdings sind auch andere Befestigungsarten möglich. In den Zylinderkörper 3 ist drehbar ein hohlzylinderförmiges Ventilelement 4 eingesetzt. Das Ventilelement weist eine Öffnung 5 auf, die im Detail in Fig. 2 dargestellt ist. Zwei senkrechte Seitenbegrenzungen 6 und 7 verlaufen parallel zur Drehachse. Die waagerechte Seitenbegrenzung 8 bildet mit den Seitenbegrenzungen 6 und 7 rechte Winkel. Die obere Seitenbegrenzung 9 ist kurvenförmig in Form einer quadratischen Funktion ausgebildet. Der Öffnung 5 gegenüberliegend ist eine Austrittsöffnung 10 vorgesehen.

Der Zylinderkörper 3 ist mit einer rechteckigen Eintrittsspalte 11 und einer ebenfalls rechteckigen Austrittsspalte 12 versehen. Es sind allerdings auch andere Querschnittsformen denkbar.

Das Ventilelement 4 besitzt eine Stirnwand 13, die mit Mitnahmenocken 14 versehen ist. Diese greifen in einen Deckel 15 ein, der mit einer schematisch dargestellten Betätigungsvorrichtung 16, beispielsweise einem Elektromotor, verbunden ist.

In das Ventilelement 4 ist ein Drosselelement 17 axial verschiebbar eingesetzt. Das Drosselelement wird mittels einer Einstellvorrichtung 18 betätigt.

Die Einstellvorrichtung 18 weist einen Einstellstift 19 auf, der drehbar in einer Hülse 20 gelagert ist. Die Hülse 20 ist in eine stirnseitige Wand 21 eingeschraubt. Da der Einstellstift 19 mittels einer Schraube 22 mit dem Drosselelement verbunden ist, macht das Drosselelement bei einer Drehung des Einstellstiftes eine Axialbewegung.

Das Ventil ist modulartig aufgebaut. Das Ventilelement 4 kann auf einfache Weise gegen ein Ventilelement mit einem anderen Arbeitsbereich ausgewechselt werden, ohne daß eine umständliche Demontage des Gehäuses notwendig ist. Das Drosselelement ist ebenfalls leicht ausbaubar.

Nachfolgend wird die Funktion des Ventiles beschrieben:
Bei einer Leistungsänderung des Brenners erhält die Betätigungseinrichtung - in diesem Fall ein Elektromotor - ein Signal und führt eine Drehbewegung aus. Bei der Drehung des Ventilelementes 4 ändert sich der Durchtrittsquerschnitt der Öffnung 5 als Funktion dritten Grades in Abhängigkeit vom Drehwinkel.

Der freie Durchtrittsquerschnitt wird gebildet durch das Zusammenwirken der Öffnung 5 mit der Eintrittsspalte 11 des Zylinderkörpers. Die Austrittsöffnung 10 im Ventilelement und die Austrittsspalte 12 im Zylinderkörper wirken ebenfalls zusammen, wobei unabhängig vom Drehwinkel stets ein genügend großer Durchtrittsquerschnitt gegeben ist.

Der maximale Durchfluß kann mit Hilfe des Drosselelementes geändert werden. Wenn sich beispielsweise die Gasbeschaffenheit ändert, kann durch axiale Verschiebung des Drosselelementes nach oben der maximale Durchtrittsquerschnitt der Öffnung begrenzt werden. Die maximale Menge kann auf diese Weise ohne Umbau und ohne Einschränkung des Drehwinkels oder des Druckverlustes eingestellt werden. Zugleich bleibt die Linearität erhalten. Mit dem Drosselelement ist eine Änderung des max. Durchflusses bis zu 50 % möglich.

In Fig. 3 ist der Durchfluß Q in m³/h in Abhängigkeit vom Drehwinkel α angegeben. Das Verhältnis ist im gesamten Stellbereich linear. Die Linie A zeigt die Veränderung des Durchflusses im ungedrosselten Zustand, d. h. das Drosselelement 17 ist nicht im Einsatz. Die Linie B zeigt die Veränderung des Volumenstromes in Abhängigkeit vom Drehwinkel unter dem maximalen Einfluß des Drosselelementes 17. Entsprechend der Stellung des Drosselelementes 17 sind zwischen diesen beiden Linien weitere Linien mit anderen Steigungen einstellbar.

## Patentansprüche

1. Ventil zum Steuern oder Regeln des Durchflusses eines Strömungsmittels mit einem Ventilgehäuse (1), das einen Durchtrittskanal (2) für das Strömungsmittel aufweist und mit einem im Durchtrittskanal angeordneten Ventilelement (4), das mittels einer Betätigungsvorrichtung drehbar ist, dadurch gekennzeichnet, daß das Ventilelement (4) eine Öffnung (5) aufweist, die derart gestaltet ist, daß sich ihr Durchtrittsquerschnitt bei einer Drehung des Ventilelementes (4) als Funktion dritten Grades in Abhängigkeit vom Drehwinkel ändert.

2. Ventil nach Anspruch 1,
dadurch gekennzeichnet, daß das Ventilelement (4) hohlzylinderförmig ausgebildet ist, wobei stromab der Öffnung (5) eine Austrittsöffnung (10) vorgesehen ist.

3. Ventil nach Anspruch 1 oder 2,
dadurch gekennzeichnet, daß ein Drosselelement (17) axial verschiebbar in das Ventilelement (4) eingesetzt ist, derart, daß sich bei der Axialbewegung der maximale Durchtrittsquerschnitt der Öffnung (5) im Ventilelement (4) verändert.

4. Ventil nach einem der Ansprüche 1 bis 3,
dadurch gekennzeichnet, daß die Öffnung (5) des Ventilelementes (4) vier Seitenbegrenzungen (6, 7, 8, 9) aufweist, von denen zwei (6, 7) parallel zur Drehachse verlaufen und ungleich lang sind sowie mit der dritten (8) einen im wesentlichen rechten Winkel bilden, wobei die vierte Seitenbegrenzung (9) kurvenförmig in Form einer quadratischen Funktion ausgebildet ist.

5. Ventil nach Anspruch 4,
dadurch gekennzeichnet, daß das Drosselelement (17) bei der Axialbewegung den Durchtrittsquerschnitt der Öffnung (5) im Bereich der geraden Seitenbegrenzungen (6, 7, 8) verändert.

6. Ventil nach einem der Ansprüche 1 bis 5,
dadurch gekennzeichnet, daß das Ventilelement (4) in einen Zylinderkörper (3) eingesetzt ist, der eine Eintrittsspalte (11) und eine Austrittsspalte (12) für das Strömungsmittel aufweist.

7. Ventil nach einem der Ansprüche 1 bis 6,
dadurch gekennzeichnet, daß das Ventilelement (4) eine Stirnwand (13) aufweist, die mit Mitnahmenocken (14) versehen ist, welche in einen Deckel (15) eingreifen, der mit der Betätigungsvorrichtung (16) verbunden ist.

8. Ventil nach Anspruch 3,
dadurch gekennzeichnet, daß das Drosselelement (17) mit einer Einstellvorrichtung (18) verbunden ist.

9. Ventil nach Anspruch 8,
dadurch gekennzeichnet, daß sich ein an dem Drosselelement (17) befestigter Einstellstift (19) drehbar in einer Hülse (20) befindet, die mit einer stirnseitigen Wand (21) verbunden ist.

10. Ventil nach einem der Ansprüche 1 bis 9,
dadurch gekennzeichnet, daß das Ventilelement (4) und das Drosselelement (17) im Ventilgehäuse (1) modulartig austauschbar angeordnet sind.

## Claims

1. A valve to control or regulate fluid flow, comprising a valve body (1) with a passage (2) to carry said fluid and in said passage a valve element (4) that can be rotated by means of an actuating device, characterised in that the valve element (4) has an opening (5) whose cross-section changes as a cubic function depending on the angle of rotation when said valve element is rotated.

2. A valve according to claim 1,
characterised in that the valve element (4) is designed as a hollow cylinder, an outlet port (10) being provided downstream of the opening (5).

3. A valve according to claim 1 or 2,
characterised in that a restricting element (17) is installed in the valve element (4) in an axially displaceable manner so that the maximum cross-section of the opening (5) in the valve element (4) changes when said restricting element is moved axially.

4. A valve according to any one of claims 1 to 3,
characterised in that the opening (5) of the valve element (4) has four lateral limits (6, 7, 8, 9), of which two (6, 7) are parallel to the axis of rotation, have different lengths and are essentially at right angles to the third (8), the fourth lateral limit (9) being curved in the form of a squared function.

5. A valve according to claim 4,
characterised in that the restricting element (17) changes the cross-section of the opening (5) at the straight lateral limits (6, 7, 8) when said restricting element is moved axially.

6. A valve according to any one of claims 1 to 5, characterised in that the valve element (4) is located in a cylinder (3) featuring a fluid inlet gap (11) and a fluid outlet gap (12).

7. A valve according to any one of claims 1 to 6,
characterised in that the valve element (4) has a front wall (13) featuring cams (14) that engage in a cover (15) connected to the actuating device (16).

8. A valve according to claim 3,
characterised in that the restricting element (17) is connected to an adjusting device (18).

9. A valve according to claim 8,
characterised in that an adjusting pin (19) secured to the restricting element (17) is located in rotatable fashion in a bushing (20) connected to a front wall (21).

10. A valve according to any one of claims 1 to 9,
characterised in that the valve element (4) and the restricting element (17) are arranged in the valve body (1) as replaceable modules.

## Revendications

1. Soupape de contrôle ou de réglage du débit de fluide avec un corps de soupape (1) présentant un canal de passage (2) pour le fluide et un élément de soupape (4) disposé dans le canal de passage et pouvant être soumis à un mouvement de rotation à l'aide d'un organe de manoeuvre, caractérisée par le fait que l'élément de soupape (4) présente une ouverture (5) conçue de la sorte que sa section est modifiée par rotation de l'élément de soupape (4) sous forme d'équation du troisième degré en fonction de l'angle de rotation.

2. Soupape selon la revendication 1, caractérisée par le fait que l'élément de soupape (4) est conçu sous forme de cylindre creux présentant en aval de l'ouverture (5) une ouverture de sortie (10).

3. Soupape selon l'une des revendications 1 ou 2, caractérisée par le fait qu'un élément d'étranglement (17) pouvant être déplacé axialement est disposé dans l'élément de soupape (4) de la sorte que la section maximale de passage de l'ouverture (5) dans l'élément de soupape (4) est modifiée par le mouvement axial.

4. Soupape selon l'une des revendications 1 à 3, caractérisée par le fait que l'ouverture (5) de l'élément de soupape (4) est délimitée par quatre parties latérales (6, 7, 8, 9) dont deux (6, 7), d'une longueur différente, sont parallèles à l'axe de rotation et forment, avec la troisième (8), un angle droit, la quatrième (9) étant courbée sous forme d'une équation quadratique.

5. Soupape selon la revendication 4, caractérisée par le fait que l'élément d'étranglement (17) modifie, par mouvement axial, la section de passage de l'ouverture (5) au niveaux des parties latérales droites (6, 7, 8).

6. Soupape selon l'une des revendications 1 à 5, caractérisée par le fait que l'élément de soupape (4) est disposé dans un corps cylindrique (3) présentant une fente d'entrée (11) et une fente de sortie (12) pour le fluide.

7. Soupape selon l'une des revendications 1 à 6, caractérisée par le fait que l'élément de soupape (4) présente une paroi frontale (13) munie de saillies (14) s'insérant dans un couvercle (15) lié à un dispositif de manoeuvre (16).

8. Soupape selon la revendication 3, caractérisée par le fait que l'élément d'étranglement (17) est lié à un dispositif de réglage (18).

9. Soupape selon la revendication 8, caractérisée par le fait qu'une cheville de réglage (19) fixée à l'élément d'étranglement (17) et pouvant être soumise à un mouvement de rotation est disposée dans un manchon (20) qui est lié à une paroi frontale (21).

10. Soupape selon l'une des revendications 1 à 9, caractérisée par le fait que l'élément de soupape (4) et l'élément d'étranglement (17) sont disposés dans le corps de soupape (1) de façon modulaire et échangeable.
